# EUROPEAN PATENT APPLICATION

(11) **EP 4 598 066 A1**
(43) Date of publication of application: **06.08.2025**
(21) Application number: 23870139.5
(22) Date of filing: 31.08.2023
(51) Int. Cl.: H04W 4/02, H04W 84/06

(54) **METHOD AND APPARATUS FOR UPDATING TIMING INFORMATION**

(30) Priority: 28.09.2022 CN 202211193347
(71) Applicant: Datang Mobile Communications Equipment Co., Ltd., Beijing 100085 (CN)
(72) Inventor: MIAO, Jinhua, Beijing 100085 (CN); ZHANG, Xiangdong, Beijing 100085 (CN); XU, Meng, Beijing 100085 (CN)
(74) Representative: Ipsilon
(86) International application number: PCT/CN2023/116097
(87) International publication number: WO 2024/066899

(57) **Abstract**

Embodiments of the present disclosure provide a method and apparatus for updating timing information. The method is applied to a terminal and comprises: the terminal obtains global navigation satellite system (GNSS) information; the terminal determines a remaining GNSS validity period; and when determining that a reporting condition is satisfied, the terminal sends the remaining GNSS validity period to an access network entity.

## Description

### CROSS-REFERENCES TO RELATED APPLICATIONS

The present application claims priority to Chinese patent application No. 202211193347.3 filed on September 28, 2022, entitled "Method and Apparatus for Updating Timing Information", which is hereby incorporated by reference in its entirety.

### FIELD

The present application relates to the field of radio communications, and in particular, to methods and apparatuses for updating timing information.

### BACKGROUND

A terminal device may reacquire global navigation satellite system (GNSS) information, but does not support simultaneous performing of acquisition of GNSS information and a communication operation. The terminal device needs to interrupt a communication procedure in case that the terminal device needs to reacquire a GNSS position. Therefore, the terminal device performs a GNSS acquisition operation and reports remaining GNSS validity duration to a network side simultaneously before accessing a cell.

However, in the related art, there is no reporting mechanism for how to report the remaining GNSS validity duration to the network side after a terminal in a connected state acquires a GNSS.

### BRIEF SUMMARY

Embodiments of the present application provide methods and apparatuses for updating timing information to solve a problem in the related art that a terminal cannot report remaining global navigation satellite system (GNSS) validity duration to a network side.

An embodiment of the present application provides a method for updating timing information, performed by a terminal, including:
obtaining global navigation satellite system (GNSS) information;
determining remaining GNSS validity duration; and
transmitting the remaining GNSS validity duration to an access network entity in case of a reporting condition is satisfied.

In an embodiment, the reporting condition includes one or more of the following:
remaining serving time of a current cell is greater than the remaining GNSS validity duration;
a reporting indication message from the access network entity, used for indicating the terminal to report the remaining GNSS validity duration, is received;
data volume of the terminal is greater than a reporting threshold;
data is received through a preset data radio bearer (DRB);
data is received through a preset quality of service (QoS) flow; or
the GNSS information is valid.

In an embodiment, transmitting the remaining GNSS validity duration to the access network entity includes:
transmitting the remaining GNSS validity duration to the access network entity through a radio resource control (RRC) message; or
transmitting the remaining GNSS validity duration to the access network entity through a medium access control-control element (MAC-CE).

In an embodiment, the method further includes: transmitting a time stamp used for indicating start time of the remaining GNSS validity duration to the access network entity.

In an embodiment, the method further includes:
receiving a measurement trigger event transmitted from the access network entity; and
transmitting the remaining GNSS validity duration to the access network entity in case that determining the reporting condition is satisfied includes:
   transmitting a measurement report to the access network entity in case that determining the reporting condition is satisfied and the measurement trigger event is triggered, where the measurement report carries the remaining GNSS validity duration.

In an embodiment, the method further includes:
receiving a first indication message transmitted from the access network entity, where the first indication message carries configuration information used for indicating the terminal to perform GNSS acquisition; and
obtaining the GNSS information based on the configuration information.

In an embodiment, the configuration information includes one or more of the following:
a period of a gap time;
a time length of a gap time; or
a start time of a gap time;
where the gap time is used for indicating the terminal a time length for obtaining the GNSS information.

In an embodiment, before receiving the first indication message transmitted from the access network entity, the method further includes:
transmitting first information to the access network entity, where the first information includes one or more of the following:
information of a maximum time length for the terminal to obtain GNSS information; or
whether the terminal supports obtaining GNSS information in a connected state.

An embodiment of the present application provides a method for updating timing information, performed by an access network entity, including:
receiving remaining global navigation satellite system (GNSS) validity duration transmitted from a terminal, where the remaining GNSS validity duration is transmitted from the terminal in case that the terminal determines a reporting condition is satisfied; and
updating a GNSS position validity timer based on the remaining GNSS validity duration.

In an embodiment, before receiving the remaining GNSS validity duration transmitted from the terminal, the method further includes:
transmitting a reporting indication message, used for indicating the terminal to report the remaining GNSS validity duration, to the terminal.

In an embodiment, receiving the remaining GNSS validity duration transmitted from the terminal includes:
receiving the remaining GNSS validity duration transmitted from the terminal through a radio resource control (RRC) message; or
receiving the remaining GNSS validity duration transmitted from the terminal through a medium access control-control element (MAC-CE).

In an embodiment, the method further includes:
receiving a time stamp, used for indicating start time of the remaining GNSS validity duration, transmitted from the terminal.

In an embodiment, the method further includes:
transmitting a measurement trigger event to the terminal.

In an embodiment, the method further includes:
transmitting a first indication message to the terminal, where the first indication message carries configuration information used for indicating the terminal to perform GNSS acquisition.

In an embodiment, the configuration information includes one or more of the following:
a period of a gap time;
a time length of a gap time; or
a start time of a gap time;
where the gap time is used for indicating the terminal a time length for obtaining the GNSS information.

In an embodiment, before transmitting the first indication message to the terminal, the method further includes:
receiving first information transmitted from the terminal, where the first information includes one or more of the following:
information of a maximum time length for the terminal to obtain GNSS information; or
whether the terminal supports obtaining GNSS information in a connected state.

An embodiment of the present application further provides an apparatus for updating timing information, for use in a terminal, including:
a first obtaining unit, used for obtaining global navigation satellite system (GNSS) information;
a determining unit, used for determining remaining GNSS validity duration; and
a first transmitting unit, used for transmitting the remaining GNSS validity duration to an access network entity in case of a reporting condition is satisfied.

In an embodiment, the reporting condition includes one or more of the following:
remaining serving time of a current cell is greater than the remaining GNSS validity duration;
a reporting indication message from the access network entity, used for indicating the terminal to report the remaining GNSS validity duration, is received;
data volume of the terminal is greater than a reporting threshold;
data is received through a preset data radio bearer (DRB);
data is received through a preset quality of service (QoS) flow; or
the GNSS information is valid.

In an embodiment, the first transmitting unit includes:
a first transmitting subunit, used for transmitting the remaining GNSS validity duration to the access network entity through a radio resource control (RRC) message; or
a second transmitting subunit, used for transmitting the remaining GNSS validity duration to the access network entity through a medium access control-control element (MAC-CE).

**In** an embodiment, the apparatus further includes:
a second transmitting unit, used for transmitting a time stamp used for indicating start time of the remaining GNSS validity duration to the access network entity.

**In** an embodiment, the apparatus further includes:
a third transmitting unit, used for receiving a measurement trigger event transmitted from the access network entity;
where the first transmitting unit includes:
   a third transmitting subunit, used for transmitting a measurement report to the access network entity in case that determining the reporting condition is satisfied and the measurement trigger event is triggered, where the measurement report carries the remaining GNSS validity duration.

**In** an embodiment, the apparatus further includes:
a first receiving unit, used for receiving a first indication message transmitted from the access network entity, where the first indication message carries configuration information used for indicating the terminal to perform GNSS acquisition; and
a second obtaining unit, used for obtaining the GNSS information based on the configuration information.

**In** an embodiment, the configuration information includes one or more of the following:
a period of a gap time;
a time length of a gap time; or
a start time of a gap time;
where the gap time is used for indicating the terminal a time length for obtaining the GNSS information.

In an embodiment, the apparatus further includes:
a fourth transmitting unit, used for transmitting first information to the access network entity, where the first information includes one or more of the following:
information of a maximum time length for the terminal to obtain GNSS information; or
whether the terminal supports obtaining GNSS information in a connected state.

An embodiment of the present application further provides an apparatus for updating timing information, for use in an access network entity, including:
a second receiving unit, used for receiving remaining global navigation satellite system (GNSS) validity duration transmitted from a terminal, where the remaining GNSS validity duration is transmitted from the terminal in case that the terminal determines a reporting condition is satisfied; and
an updating unit, used for updating a GNSS position validity timer based on the remaining GNSS validity duration.

In an embodiment, the apparatus further includes:
a fifth transmitting unit, used for transmitting a reporting indication message, used for indicating the terminal to report the remaining GNSS validity duration, to the terminal.

In an embodiment, the second receiving unit includes:
a first receiving subunit, used for receiving the remaining GNSS validity duration transmitted from the terminal through a radio resource control (RRC) message; or
a second receiving subunit, used for receiving the remaining GNSS validity duration transmitted from the terminal through a medium access control-control element (MAC-CE).

In an embodiment, the apparatus further includes:
a third receiving unit, used for receiving a time stamp, used for indicating start time of the remaining GNSS validity duration, transmitted from the terminal.

In an embodiment, the apparatus further includes:
a sixth transmitting unit, used for transmitting a measurement trigger event to the terminal.

In an embodiment, the apparatus further includes:
a seventh transmitting unit, used for transmitting a first indication message to the terminal, where the first indication message carries configuration information used for indicating the terminal to perform GNSS acquisition.

In an embodiment, the configuration information includes one or more of the following:
a period of a gap time;
a time length of a gap time; or
a start time of a gap time;
where the gap time is used for indicating the terminal a time length for obtaining the GNSS information.

In an embodiment, the apparatus further includes:
a fourth receiving unit, used for receiving first information transmitted from the terminal, where the first information includes one or more of the following:
information of a maximum time length for the terminal to obtain GNSS information; or
whether the terminal supports obtaining GNSS information in a connected state.

An embodiment of the present application further provides a terminal, including a memory, a transceiver and a processor,
where the memory is used for storing a computer program, the transceiver is used for receiving and transmitting data under control of the processor, and the processor is used for reading the computer program in the memory and performing the following operations:
obtaining global navigation satellite system (GNSS) information;
determining remaining GNSS validity duration; and
transmitting the remaining GNSS validity duration to an access network entity in case of a reporting condition is satisfied.

In an embodiment, the reporting condition includes one or more of the following:
remaining serving time of a current cell is greater than the remaining GNSS validity duration;
a reporting indication message from the access network entity, used for indicating the terminal to report the remaining GNSS validity duration, is received;
data volume of the terminal is greater than a reporting threshold;
data is received through a preset data radio bearer (DRB);
data is received through a preset quality of service (QoS) flow; or
the GNSS information is valid.

In an embodiment, transmitting the remaining GNSS validity duration to the access network entity includes:
transmitting the remaining GNSS validity duration to the access network entity through a radio resource control (RRC) message; or
transmitting the remaining GNSS validity duration to the access network entity through a medium access control-control element (MAC-CE).

In an embodiment, the operations further include: transmitting a time stamp used for indicating start time of the remaining GNSS validity duration to the access network entity.

In an embodiment, the operations further include:
receiving a measurement trigger event transmitted from the access network entity; and
transmitting the remaining GNSS validity duration to the access network entity in case that determining the reporting condition is satisfied includes:
   transmitting a measurement report to the access network entity in case that determining the reporting condition is satisfied and the measurement trigger event is triggered, where the measurement report carries the remaining GNSS validity duration.

In an embodiment, the operations further include:
receiving a first indication message transmitted from the access network entity, where the first indication message carries configuration information used for indicating the terminal to perform GNSS acquisition; and
obtaining the GNSS information based on the configuration information.

In an embodiment, the configuration information includes one or more of the following:
a period of a gap time;
a time length of a gap time; or
a start time of a gap time;
where the gap time is used for indicating the terminal a time length for obtaining the GNSS information.

In an embodiment, before receiving the first indication message transmitted from the access network entity, the operations further include:
transmitting first information to the access network entity, where the first information includes one or more of the following:
information of a maximum time length for the terminal to obtain GNSS information; or
whether the terminal supports obtaining GNSS information in a connected state.

An embodiment of the present application further provides an access network entity, including a memory, a transceiver and a processor,
where the memory is used for storing a computer program, the transceiver is used for receiving and transmitting data under control of the processor, and the processor is used for reading the computer program in the memory and performing the following operations:
receiving remaining global navigation satellite system (GNSS) validity duration transmitted from a terminal, where the remaining GNSS validity duration is transmitted from the terminal in case that the terminal determines a reporting condition is satisfied; and
updating a GNSS position validity timer based on the remaining GNSS validity duration.

In an embodiment, before receiving the remaining GNSS validity duration transmitted from the terminal, the operations further include:
transmitting a reporting indication message, used for indicating the terminal to report the remaining GNSS validity duration, to the terminal.

In an embodiment, receiving the remaining GNSS validity duration transmitted from the terminal includes:
receiving the remaining GNSS validity duration transmitted from the terminal through a radio resource control (RRC) message; or
receiving the remaining GNSS validity duration transmitted from the terminal through a medium access control-control element (MAC-CE).

In an embodiment, the operations further include:
receiving a time stamp, used for indicating start time of the remaining GNSS validity duration, transmitted from the terminal.

In an embodiment, the operations further include:
transmitting a measurement trigger event to the terminal.

In an embodiment, the operations further include:
transmitting a first indication message to the terminal, where the first indication message carries configuration information used for indicating the terminal to perform GNSS acquisition.

In an embodiment, the configuration information includes one or more of the following:
a period of a gap time;
a time length of a gap time; or
a start time of a gap time;
where the gap time is used for indicating the terminal a time length for obtaining the GNSS information.

In an embodiment, before transmitting the first indication message to the terminal, the operations further include:
receiving first information transmitted from the terminal, where the first information includes one or more of the following:
information of a maximum time length for the terminal to obtain GNSS information; or
whether the terminal supports obtaining GNSS information in a connected state.

An embodiment of the present application further provides a processor readable storage medium storing a computer program, where the computer program is used for causing a processor to perform the methods for updating timing information described above.

In the methods and apparatuses for updating timing information provided by the embodiments of the present application, timing information of the network side and a terminal side are updated simultaneously by reporting the remaining GNSS validity duration by the terminal to the access network entity, which may be applicable for the terminal to report the remaining GNSS validity duration after obtaining the GNSS information in the connected state, and the timing information is updated synchronously.

### BRIEF DESCRIPTION OF THE DRAWINGS

In order to illustrate the solutions disclosed in the embodiments of the present application or the related art more clearly, the drawings used in the description of the embodiments or the related art are briefly described below. The drawings in the following description are only some embodiments of the present application, and other drawings may be obtained according to these drawings without any creative work for those skilled in the art.
FIG. 1 is a schematic diagram of a non-terrestrial network (NTN) network according to the present application;
FIG. 2 is a first schematic flowchart of a method for updating timing information according to an embodiment of the present application;
FIG. 3 is a second schematic flowchart of a method for updating timing information according to an embodiment of the present application;
FIG. 4 is a first schematic structural diagram of a second medium access control-control element (MAC-CE) according to an embodiment of the present application;
FIG. 5 is a second schematic structural diagram of a second MAC-CE according to an embodiment of the present application;
FIG. 6 is a first schematic structural diagram of an apparatus for updating timing information according to an embodiment of the present application;
FIG. 7 is a second schematic structural diagram of an apparatus for updating timing information according to an embodiment of the present application;
FIG. 8 is a schematic structural diagram of a terminal according to an embodiment of the present application; and
FIG. 9 is a schematic structural diagram of an access network entity according to an embodiment of the present application.

### DETAILED DESCRIPTION

In the embodiments of the present application, the term "and/or" describes a related relationship of associated objects, and indicates that there may be three kinds of relationships. For example, A and/or B may represent that A exists alone, A and B exist simultaneously, and B exists alone. Character "/" generally indicates that the associated objects have an "or" relationship.

In the embodiments of the present application, the term "multiple" refers to two or more than two, and other quantifiers are similar.

The solutions in the embodiments of the present application are clearly and completely described in the following with reference to the accompanying drawings in the embodiments of the present application. These embodiments are only a part of the embodiments of the present application, and not all of the embodiments. All other embodiments obtained by a person of ordinary skill in the art based on the embodiments of the present application without any creative work belong to the scope of the present application.

The solutions according to the embodiments of the present application may be applicable to various systems, for example, 5G systems. For example, the applicable systems may be a global system of mobile communication (GSM) system, a code division multiple access (CDMA) system, a wideband code division multiple access (WCDMA) general packet radio service (GPRS) system, a long term evolution (LTE) system, an LTE frequency division duplex (FDD) system, an LTE time division duplex (TDD) system, a long term evolution advanced (LTE-A) system, a universal mobile telecommunication system (UMTS), a worldwide interoperability for microwave access (WiMAX) system, a 5G new radio (NR) system, etc. These various systems include a terminal device and a network device, and may further include a core network part, such as an evolved packet system (EPS), a 5G system (5GS), and the like.

The terminal device in the embodiments of the present application may be a device that provides voice and/or data connectivity to a user, a handheld device with a wireless connection function, or other processing devices connected to a wireless modem. In different systems, the names of the terminal device may be different. For example, in the 5G system, the terminal device may be called as a user equipment (UE). A wireless terminal device may communicate with one or more core networks (CNs) via a radio access network (RAN), and the wireless terminal device may be a mobile terminal device, such as a mobile phone (or cellular phone), a computer with mobile terminal device, e.g., a portable mobile device, a pocket-sized mobile device, a handheld mobile device, a computer-built mobile device or a vehicle-mounted mobile device, which exchange language and/or data with the radio access network. For example, a personal communication service (PCS) phone, a radio phone, a session initiated protocol (SIP) phone, a wireless local loop (WLL) station, a personal digital assistant (PDA) and other devices. A wireless terminal device may also be called a system, a subscriber unit, a subscriber station, a mobile station, a mobile, a remote station, an access point, a remote terminal, an access terminal, a user terminal, a user agent, or a user device, which is not limited in the embodiments of the present application.

The network device in the embodiments of the present application may be a base station, and the base station may include multiple cells providing services for a terminal. Depending on the specific scenario, the base station may be called an access point, or a device communicating with a wireless terminal device through one or more sectors on the air interface in the access network, or other names. The network device may be used for exchanging received air frames with internet protocol (IP) packets, and acting as a router between the wireless terminal device and the rest of the access network, where the rest of the access network may include an IP communication network. The network device may also coordinate attribute management for the air interface. For example, the network device in the embodiments of the present application may be a base transceiver station (BTS) in a global system for mobile communications (GSM) or a code division multiple access (CDMA), a node B in a wide-band code division multiple access (WCDMA), an evolutional node B (eNB or e-Node B) in a long term evolution (LTE) system, a 5G base station (gNB) in 5G network architecture (next generation system), a home evolved node B (HeNB), a relay node, a femto, or a pico base station (pico), etc., which is not limited in the embodiments of the present application. In some network structures, the network device may include a centralized unit (CU) node and a distributed unit (DU) node, and the centralized unit and the distributed unit may be geographically separated.

A multi-input multi-output (MIMO) transmission may be performed between the network device and the terminal device by using one or more antennas. The MIMO transmission may be single-user MIMO (SU-MIMO) or multi-user MIMO (MU-MIMO). Depending on the form and number of antenna combinations, MIMO transmission may be 2D-MIMO, 3D-MIMO, FD-MIMO or massive-MIMO, and may also be diversity transmission, precoding transmission, beamforming transmission, etc.

In order to facilitate understanding of the embodiments of the present application, the terms or background related to the embodiments of the present application are introduced blow.

### (1) Non-terrestrial network (NTN)

An NTN network refers to using a satellite as a communication relay to connect a terminal and a base station in a wireless way. The NTN network may improve network-side coverage and provide continuous coverage for a terminal in a scenario such as desert or ocean.

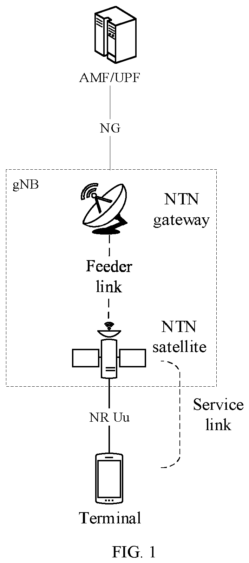

FIG. 1 is a schematic diagram of a non-terrestrial network (NTN) network according to the present application. As shown in FIG. 1, taking an NTN network in a 5th generation (5G) scenario as an example, a service link is between an NTN satellite and a terminal, and a feeder link is between the NTN satellite and an NTN gateway. In order to facilitate understanding, it is regarded that the NTN satellite and the NTN gateway as a part of a next generation NodeB (gNB).

Based on the network architecture, the NTN satellite transparently forwards data from a base station to the terminal. Similarly, data of the terminal is also transparently forwarded to the NTN gateway and the base station through the NTN satellite.

One gNB may serve multiple NTN satellites; and one NTN satellite may also be served by multiple gNBs. In a traditional NTN network, the NTN satellite may perform data transmission after changing a carrier frequency on a service link.

The NTN network includes the following three types of service links:
an earth-fixed cell: that is, a cell covered by an NTN satellite is always unchanged, such as a cell projected by a geostationary orbit (GEO) satellite on the ground;
a quasi-earth-fixed cell: that is, a certain fixed area on the earth that is stably covered by a satellite beam for a period of time;
an earth-moving cell: in this scenario, beam coverage of satellite slides on the earth.

### (2) Internet of things (IoT) NTN technology

An IoT NTN technology aims to enable an IoT device, which is mainly a narrow band internet of things (NBIoT) device or a long term evolution (LTE)-based IoT (LTE enhanced MTO (eMTC)) device, to access a satellite network.

In related technologies, a main research scenario is a scenario of short connection. In this scenario, in case that a global navigation satellite system (GNSS) position validity timer times out, a terminal equipment (UE) may enter an idle state.

The UE reacquires GNSS information, but cannot support GNSS acquisition and an NTN NB-IoT/eMTC operation simultaneously, that is, it cannot support the UE to obtain the GNSS information and maintain NTN NB-IoT/eMTC communication in a connected state. If an NB-IoT/eMTC device needs to reacquire a GNSS position, an NB-IoT/eMTC communication procedure needs to be interrupted. Therefore, a traditional technology does not support the UE to obtain the GNSS information in the connected state.

Therefore, a general behavior of a terminal is to perform a GNSS information acquisition operation before accessing a cell, and complete the reporting of the remaining GNSS validity duration to an access network side (such as a base station) simultaneously through radio resource control (RRC) connection setup (also referred to as msg5).

However, a traditional IoT NTN needs to support a long connection for a wider range of scenarios, that is, an IoT NTN device is in a connected state for a long period of time.

However, when in the connected state, the terminal may also obtain GNSS through other ways, such as configuring a gap. After obtaining GNSS, the terminal also needs to report the remaining GNSS validity duration to the network side, but there is no reporting mechanism in the related art.

An embodiment of the present application provides a method for updating timing information, which is used for a terminal to report remaining GNSS validity duration to an access network after obtaining GNSS information in a connected state.

The solutions in the embodiments of the present application are clearly and completely described in the following with reference to the accompanying drawings in the embodiments of the present application. These embodiments are only a part of the embodiments of the present application, and not all of the embodiments. All other embodiments obtained by a person of ordinary skill in the art based on the embodiments of the present application without any creative work belong to the scope of the present application.

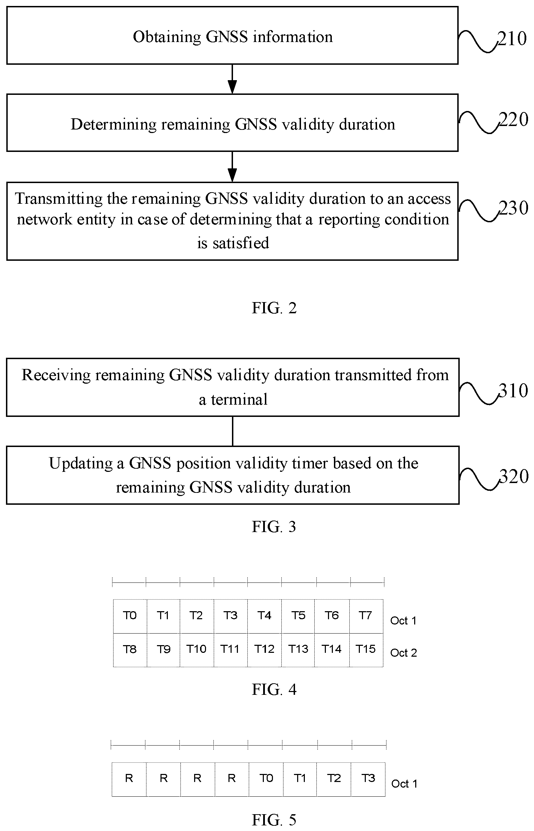

FIG. 2 is a first schematic flowchart of a method for updating timing information according to an embodiment of the present application. As shown in FIG. 2, an embodiment of the present application provides a method for updating timing information, performed by a terminal, including following steps.

Step 210: obtaining global navigation satellite system (GNSS) information.

In an embodiment, the terminal may be a general terminal device or an IoT terminal device (refer to the IoT device introduced above). The terminal may be in a connected state or an idle state. The above are examples for facilitating understanding of the embodiments of the present application, and the embodiments of the present application do not limit a type of terminal.

Taking a terminal in the connected state as an example, the terminal in the connected state may maintain an RRC connection between the terminal and a network and obtain GNSS information in the connected state by stopping data transmission. The GNSS information may include a GNSS position, a pseudo-range and a pseudo-range rate, a navigation message, an accumulated change amount or carrier, or hardware clock information, etc. The terminal may obtain the GNSS information through GNSS measurement.

For example, a gap time may be configured, and the terminal may stop data transmission with the network during the gap time, perform the GNSS measurement, and obtain the GNSS information. The GNSS information acquisition is completed before the gap time expires, and the data transmission is resumed after the gap time expires, thereby maintaining an RRC connection with the network and completing the acquisition of GNSS information. The above are examples for facilitating understanding of the embodiments of the present application, and should not constitute any limitation on the present application. For example, a way for obtaining GNSS information by the terminal may refer to other related technologies, which is not described in detail here.

The terminal may obtain the GNSS information after a GNSS position valid timer times out, or obtain the GNSS information after receiving an indication transmitted from the access network entity. The above are examples for facilitating understanding of the embodiments of the present application. The embodiments of the present application do not limit when the terminal obtains the GNSS information.

Step 220: determining remaining GNSS validity duration.

In an embodiment, the remaining GNSS validity duration may be determined by the terminal based on a capability of the terminal, such as a hardware (such as a mobile sensor, a position sensor, an environment sensor, etc.) parameter of the terminal device, a hardware parameter of a satellite communicating with the terminal, etc. The remaining GNSS validity duration may refer to remaining validity time of currently obtained GNSS information.

The remaining GNSS validity duration may be used to update a GNSS position validity timer.

Step 230: transmitting the remaining GNSS validity duration to an access network entity in case of a reporting condition is satisfied.

In an embodiment, the reporting condition may be determined based on a terminal condition and/or a network condition. The terminal condition may include a terminal service, a terminal movement track, etc., such as serving time required for the terminal service and data volume that the terminal needs to process. The network condition may include cell bearer, cell busyness, a network supported service, etc. The reporting condition may be preconfigured by a network side, agreed upon by a protocol, or transmitted from the network side to the terminal. The reporting condition may be statically configured, or dynamically configured by a user (such as an operator). The embodiments of the application do not limit how the terminal learns the reporting condition, a configuration way of the reporting condition, and specific content of the reporting condition.

Transmitting the remaining GNSS validity duration to an access network entity in case of the reporting condition is satisfied refers to the terminal determines that the reporting condition is satisfied and transmits the remaining GNSS validity duration, determined by the terminal, to the access network entity.

For example, the terminal may transmit the remaining GNSS validity duration to the access network entity while determining that the reporting condition is satisfied; the terminal may transmit the remaining GNSS validity duration to the access network entity within a predefined time after determining that the reporting condition is satisfied; or, the terminal may transmit the remaining GNSS validity duration to the access network entity after determining that the reporting condition is satisfied and a predefined event is triggered. The above are examples for facilitating understanding of the embodiments of the application and should not constitute any limitation on the application. The embodiments of the application do not limit the specific time for the terminal to transmit the remaining GNSS validity duration to the access network entity, as long as it is determined that the reporting condition is satisfied.

After the terminal determines the remaining GNSS validity duration, the terminal in the connected state may transmit the remaining GNSS validity duration determined by the terminal to the access network entity while maintaining communication with the network (connected state).

In the method for updating timing information provided by the embodiment of the present application, timing information of the network side and a terminal side are updated simultaneously by reporting the remaining GNSS validity duration by the terminal to the access network entity, which may be applicable for the terminal to report the remaining GNSS validity duration after obtaining the GNSS information in the connected state, and the timing information is updated synchronously. After the terminal determines whether a condition is satisfied, in case that the condition is satisfied, the terminal transmits the remaining GNSS validity duration to the access network entity. Depending on the configuration of reporting condition, effects such as timely reporting or resource saving, etc. may be achieved. For example, resource waste caused by reporting the remaining GNSS validity duration in case that there is no need to update the timing information may be avoided.

In an embodiment, the reporting condition includes one or more of the following:
remaining serving time of a current cell is greater than the remaining GNSS validity duration;
a reporting indication message from the access network entity, used for indicating the terminal to report the remaining GNSS validity duration, is received;
data volume of the terminal is greater than a reporting threshold;
data is received through a preset data radio bearer (DRB);
data is received through a preset quality of service (QoS) flow; or
the GNSS information is valid.

In an embodiment, for the remaining serving time of the current cell is greater than the remaining GNSS validity duration, the current cell refers to a cell that is currently accessed by the terminal; and for the remaining serving time of the current cell, during application, the terminal generally arrives and leaves a cell dynamically and randomly, and the terminal remains active in each cell with different serving times. The serving time may refer to the time that the current cell provides services to the terminal. The remaining serving time may refer to the remaining serving time provided by the current cell to the terminal, or the time that the current cell is able to provide service to the terminal before the terminal is handed over to a next cell. The remaining serving time may be associated with an activity track of the terminal, a service type that the current cell may provide to the terminal, a service type required by the terminal, or a resource that the current cell may provide to the terminal, etc.

The above are examples for facilitating understanding of the embodiments of the present application. A concept and calculation of the remaining serving time of the current cell may refer to the related technologies, such as communication protocol standards, which are not described in detail here.

In an embodiment, a method for the terminal to determine the remaining serving time of the current cell includes but is not limited to one or more of the following:
the terminal reads a broadcast message of a satellite and obtains the remaining serving time of the current cell *t-ServingTime;* or
the terminal calculates and obtains the remaining serving time of the current cell based on a satellite speed, a terminal speed, satellite position information, and terminal position information.

The satellite refers to an NTN satellite connected to the terminal.

In the method for updating timing information provided by the embodiment of the present application, a resource may be saved by transmitting the remaining GNSS validity duration to the access network entity by the terminal in case that the remaining serving time of the current cell is greater than the remaining GNSS validity duration. In case that the remaining serving time of the current cell is less than or equal to the remaining GNSS validity duration, the GNSS information reported by the terminal may be ensured to be valid before the terminal is handed over to a new cell. However, before the remaining GNSS validity duration expires, the terminal may have been handed over to a new cell, and reporting the remaining GNSS validity duration leads to a waste of resource.

For the data volume of the terminal is greater than the reporting threshold, the data volume of the terminal refers to the data volume that the terminal needs to transmit/process, and the reporting threshold is preset. The reporting threshold may be specified by a protocol, preconfigured by a network side, or notified by a network side. The embodiments of the present application do not limit how the reporting threshold is configured and a specific threshold value.

In an embodiment, configuration of the reporting threshold value may be associated with time required to transmit or process the data volume.

In the method for updating timing information provided by the embodiment of the present application, a resource may be saved by transmitting the remaining GNSS validity duration to the access network entity by the terminal in case that the data volume of the terminal is greater than the reporting threshold. In an embodiment, in case that the data volume of the terminal is greater than the reporting threshold, the terminal may not be able to complete the transmission/processing of the data before the remaining GNSS validity duration expires, and the terminal needs to report the remaining GNSS validity duration to the network side; in case that the data volume of the terminal is less than or equal to the reporting threshold, the terminal may complete the transmission/processing of the data before the remaining GNSS validity duration expires, there is no need to report the remaining GNSS validity duration, and the resource is saved.

For the data is received through a preset DRB and the data is received through a preset QoS flow:
a DRB is a bearer used to transmit service data between an access network entity (such as a base station) and a terminal UE; a DRB is a channel through which user data is actually transmitted; mapping may be achieved between a QoS and a DRB; and for example, in LTE, up to 8 DRBs may be established simultaneously between the terminal and the base station based on different QoSs.

The DRB or the QoS flow may be preset. In case that data from a preset DRB bearer arrives at the terminal, or data from a DRB bearer mapped by a preset QoS flow arrives at the terminal, the terminal reports the remaining GNSS validity duration to the access network entity.

In an embodiment, the DRB or QoS flow may be preconfigured by the network, agreed upon by a protocol, or notified by the network. The above are examples for facilitating understanding of the present application, and the embodiments of the present application do not limit how the DRB or the QoS flow is preset.

In the method for updating timing information provided by the embodiment of the present application, a resource may be saved by transmitting the remaining GNSS validity duration to the access network entity by the terminal in case that data is received through a preset DRB or QoS flow. The preset DRB or QoS flow may be used to transmit data that requires GNSS information. In case that data is received on the preset DRB or QoS flow, it indicates that the network side needs the remaining GNSS validity duration. In this case, reporting the remaining GNSS validity period may save a resource.

For a reporting indication message, used for indicating the terminal to report the remaining GNSS validity duration, transmitted from the access network entity is received, after receiving the reporting indication message transmitted from the access network entity, the remaining GNSS validity duration is transmitted to the access network entity based on the reporting indication message.

In an embodiment, the access network entity may determine whether it is necessary to report the remaining GNSS validity duration, and in case that the access network entity determines that it is necessary to report the remaining GNSS validity duration, the access network entity indicates the terminal to report the remaining GNSS validity duration. In an embodiment, the access network entity may determine whether it is necessary to report the remaining GNSS validity duration in combination with the remaining serving time of the current cell, data volume that the access network entity needs to transmit to the terminal, or whether there is data on the preset DRB bearer/QoS flow. The above are examples for facilitating understanding the present application, and the embodiments of the present application do not limit a determination criteria of the network side (access network).

In the method for updating timing information provided by the embodiment of the present application, whether to report the remaining GNSS validity duration is determined by whether the reporting indication message, used for indicating the terminal to report the remaining GNSS validity duration, transmitted from the access network entity is received. It is not necessary to report the remaining GNSS validity duration every time, and a resource is saved.

For the GNSS information is valid, it refers to that the obtained GNSS information is valid, and there is no situation such as GNSS information error or GNSS expiration, etc.

In the method for updating timing information provided by the embodiment of the present application, the remaining GNSS validity duration is reported in case that the GNSS information is valid, which avoids reporting the remaining GNSS validity duration corresponding to invalid GNSS information after obtaining the invalid GNSS information, and avoids resource waste.

In an embodiment, the reporting condition may be: obtaining the GNSS information and/or the GNSS position validity timer.

In the method for updating timing information provided by the embodiment of the present application, the remaining GNSS validity duration is reported after obtaining the GNSS information and/or the GNSS position validity timer times out, which ensures the timeliness and effectiveness of reporting the remaining GNSS validity duration.

In an embodiment, the above conditions may be combined with each other. The combinations and the corresponding effects may be referred to the description above, which is not repeated here.

In an embodiment, transmitting the remaining GNSS validity duration to the access network entity includes:
transmitting the remaining GNSS validity duration to the access network entity through a radio resource control (RRC) message; or
transmitting the remaining GNSS validity duration to the access network entity through a medium access control-control element (MAC-CE).

In case that the terminal transmits the remaining GNSS validity duration to the access network entity through the MAC-CE, it refers to that the terminal maintains communication with the network, the terminal transmits an MAC-CE to the network, and the remaining GNSS validity duration is carried in the MAC-CE.

In an embodiment, the access network entity may transmit a first MAC-CE to the terminal, where the first MAC-CE may indicate the terminal to obtain the GNSS information; after the terminal obtains the GNSS information, the terminal reports a second MAC-CE to the access network entity, where the second MAC-CE carries the remaining GNSS validity duration.

In an embodiment, a first timer is defined, and the first timer is turned on after the terminal transmits the second MAC-CE on an uplink (UL) authorization.

In an embodiment, after the first timer times out, the terminal re-triggers the second MAC-CE, update the remaining GNSS validity duration, and then transmits it on a subsequent available UL authorization.

In an embodiment, in case that there is no UL authorization resource, the terminal may trigger a scheduling request (SR) or a random access procedure, and transmit the second MAC-CE.

In an embodiment, a logical channel identity (ID) may be predefined for the second MAC-CE. The predefinition may be configured by a network, notified by a network, or agreed upon by a protocol. The above are examples for facilitating understanding of the embodiments of the present application, and the embodiments of the present application do not limit how the terminal and the access network entity predefine the logical channel ID.

In an embodiment, in case that the terminal reacquires the GNSS information or has transmitted the remaining GNSS validity duration corresponding to the current GNSS information, the transmitting of the MAC-CE message to the access network entity is canceled.

In an embodiment, in case that the terminal reacquires the GNSS information or has transmitted the second MAC-CE, triggering of the second MAC-CE is canceled, and repetition transmission of the MAC-CE is reduced.

In case that the terminal transmits the remaining GNSS validity duration to the access network entity through an RRC message, if refers to that the terminal maintains communication with the network, the terminal transmits the RRC message to the network, and the RRC message carries the remaining GNSS validity duration.

In an embodiment, the access network entity may first transmit a first RRC message to the terminal, where the first RRC message may be a request message; and the terminal transmits a second RRC message to the access network entity, where the second RRC message carries the remaining GNSS validity duration, and the second RRC message may be a response message.

In an embodiment, the RRC message (second RRC message) transmitted from the terminal to the access network entity may be one or more of the following:
a terminal information response (*UEInformationReponse*) message;
a terminal assistance information (*ueAssistanceInformation*) message;
an RRC reconfiguration (*OtherConfig*) message;
a handover complete message;
a measurement report message; or
a newly defined RRC message.

For the case where the RRC message is a handover complete message, it may be:
in case that the terminal is a machine type communication (MTC) type device, transmitting the remaining GNSS validity duration to the access network entity includes:
transmitting the remaining GNSS validity duration to the access network entity based on the handover complete message.

For example, in case that the terminal is the MTC type, and the terminal determines before the handover that the remaining serving time for the terminal in the current cell is greater than the remaining GNSS validity duration, the terminal may transmit the remaining GNSS validity duration when transmitting the handover complete message.

For the case where the RRC message is a newly defined RRC message, the newly defined RRC message refers to a redefined second RRC message, which may be a RRC message specifically used for GNSS information reporting, such as a GNSS response (*GNSSResponse*) message.

For the case where the RRC message is a measurement report message, the measurement report message refers to an RRC message used for transmitting a measurement report to an access network entity, the measurement report message carries a measurement report, the measurement report may be a GNSS measurement report, and the measurement report carries the remaining GNSS validity duration.

In an embodiment, the method further includes: transmitting a time stamp used for indicating start time of the remaining GNSS validity duration to the access network entity.

In an embodiment, the time stamp is used for indicating the start time of the remaining GNSS validity duration. The time stamp may be obtained by the terminal from the NTN satellite to which the terminal is connected. The NTN satellite may be used as a time receiving device to obtain time for a time stamp server, and issue a time stamp certificate to the terminal through the time stamp server. The time stamp may be used to synchronize understandings of the remaining GNSS validity duration by the terminal and the access network entity.

For example, the terminal and the access network entity transmit a radio link control (RLC) retransmission or a hybrid automatic repeat request (HARQ) retransmission, resulting in different understandings of time by the terminal and the access network entity. The remaining GNSS validity duration reported by the terminal is 25 minutes, which means that there are 25 minutes left starting from 12:00:00, while the access network entity understands that there are 25 minutes left starting from 11:55:00. After adding the time stamp, the access network entity may know that the remaining GNSS validity duration starts from the time indicated by the time stamp reported by the terminal.

In an embodiment, the time stamp may be carried by an RRC message (second RRC message) transmitted from the terminal to the access network entity.

In the method for updating timing information provided by the embodiment of the present application, a problem of inconsistent understanding of the remaining GNSS validity duration between the terminal and the base station due to RLC retransmission or HARQ retransmission may be effectively avoided by reporting the time stamp.

In an embodiment, the method further includes:
receiving a measurement trigger event transmitted from the access network entity; and
transmitting the remaining GNSS validity duration to the access network entity in case that determining the reporting condition is satisfied includes:
   transmitting a measurement report to the access network entity in case that determining the reporting condition is satisfied and the measurement trigger event is triggered, where the measurement report carries the remaining GNSS validity duration.

In an embodiment, the measurement trigger event may be at least one of the following:
the terminal obtains GNSS information; or
the terminal obtains GNSS information within [T1 T2] time, where T1 and T2 correspond to a start time and an end time of a gap time.

After obtaining the GNSS information, in case that the measurement trigger event is triggered, the terminal reports the measurement report to the access network entity, and the measurement report includes the remaining GNSS validity duration.

In an embodiment, the measurement report may be carried by a measurement report message.

In the method for updating timing information provided by the embodiment of the present application, reporting of the remaining GNSS validity duration is triggered by configuring a measurement trigger time, and the remaining GNSS validity duration is transmitted to the access network entity through the measurement report. After the measurement is completed, such as after the GNSS measurement is completed, the remaining GNSS validity duration is transmitted to the access network entity through the measurement report, without using other signaling to transmit the remaining GNSS validity duration separately, which saves a signaling resource, and ensures the timeliness of reporting the remaining GNSS validity duration.

In an embodiment, the method further includes:
receiving a first indication message transmitted from the access network entity, where the first indication message carries configuration information used for indicating the terminal to perform GNSS acquisition; and
obtaining the GNSS information based on the configuration information.

In an embodiment, for the configuration information used for indicating the terminal to perform the GNSS acquisition, such as whether to start GNSS acquisition (GNSS measurement), when to acquire GNSS, etc., a gap time may be configured for a measurement mode (such as a measurement gap) for the terminal in the connected state. The gap time may be referred to the above description, which is not repeated here. For the measurement gap, a gap mode, a gap resource set offset, etc. may be set.

The terminal may perform GNSS measurement based on the configuration information transmitted from the access network entity and obtain the GNSS information.

In an embodiment, the configuration information includes one or more of the following:
a period of a gap time;
a time length of a gap time; or
a start time of a gap time;
where the gap time is used for indicating the terminal a time length for obtaining the GNSS information.

In an embodiment, the gap time is used for a GNSS measurement gap. The GNSS measurement gap refers to a portion of time reserved for GNSS measurement, and the reserved portion of time is the measurement gap time, which is referred to as the gap time in the embodiments of the present application. The embodiments of the present application do not limit its name, as long as the gap time may be limited. During the measurement gap time, the UE does not transmit or receive any data. The UE adjusts a receiver to a GNSS measurement frequency to perform GNSS measurement, and then switches it to a frequency of a current cell when the measurement gap time ends.

In an embodiment, referring to the period of the gap time, during a period of a gap, a period of a gap time is generated every certain period of time (period), and the gap time is used for GNSS measurement.

The time length of the gap time refers to the duration of the gap time.

The start time of the gap time refers to the time when the gap time starts.

In an embodiment, the period of the gap time, the time length of the gap time, and the start time of the gap time may have default preset values. In case that the configuration information does not include corresponding information, the default preset values are used.

For example, a period is 60 s, a time length is 10 s, and a start time is 00:00:00. Then, starting from the start time of 00:00:00, a GNSS measurement is performed from 00:00:00 to 00:00:10, the GNSS measurement is stopped from 00:00:10 to 00:01:10, the GNSS measurement is performed again from 00:01:10 to 00:01:20, and GNSS information is updated in this cycle.

In an embodiment, before receiving the first indication message transmitted from the access network entity, the method further includes:
transmitting first information to the access network entity, where the first information includes one or more of the following:
information of a maximum time length for the terminal to obtain GNSS information; or
whether the terminal supports obtaining GNSS information in a connected state.

In an embodiment, the information of the maximum time length for the terminal to obtain the GNSS information refers to the maximum time length needed for the terminal to perform GNSS acquisition (or GNSS measurement). In an embodiment, the terminal may determine the information of the maximum time length for obtaining GNSS information based on a capability of the terminal device. In an embodiment, the terminal may use information of time length used to obtain GNSS information in a historical measurement procedure (such as finding a maximum value in historical values) as the information of the maximum time length for obtaining GNSS information.

Whether the terminal supports obtaining GNSS information in the connected state refers to whether the terminal in the connected state can obtain GNSS information.

In the method for updating timing information provided by the embodiment of the present application, the first information is transmitted to the access network entity from the terminal, and the access network entity may accurately configure the configuration information for GNSS acquisition for the terminal, which avoids the terminal being unable to obtain valid GNSS information due to the gap time being too short, avoids the terminal being unable to obtain latest GNSS information in real time due to the gap time being too long, and improves the effectiveness and efficiency of GNSS acquisition.

FIG. 3 is a second schematic flowchart of a method for updating timing information according to an embodiment of the present application. As shown in FIG. 3, an embodiment of the present application provides a method for updating timing information, performed by an access network entity, including:
step 310: receiving remaining global navigation satellite system (GNSS) validity duration transmitted from a terminal, where the remaining GNSS validity duration is transmitted from the terminal in case that the terminal determines a reporting condition is satisfied; and
step 320: updating a GNSS position validity timer based on the remaining GNSS validity duration.

In an embodiment, the remaining GNSS validity duration may be determined by the terminal based on a capability of the terminal, such as a hardware (such as a mobile sensor, a position sensor, an environment sensor, etc.) parameter of the terminal device, a hardware parameter of a satellite communicating with the terminal, etc. Validity duration of currently obtained GNSS information is determined, that is, remaining GNSS validity duration is determined.

The terminal may be in a connected state.

The GNSS position validity timer is used to count the remaining GNSS validity duration for a GNSS position.

The reporting condition may be referred to the above description, which is not repeated here.

In the method for updating timing information provided by the embodiment of the present application, the timing information of the network side and the terminal side are updated simultaneously by reporting the remaining GNSS validity duration by the terminal to the access network entity, which may be applicable for the terminal to report the remaining GNSS validity duration after obtaining the GNSS information in the connected state, and the timing information is updated synchronously. After the terminal determines whether the condition is satisfied, in case that the condition is satisfied, the terminal transmits the remaining GNSS validity duration to the access network entity. Depending on the configuration of reporting condition, effects such as timely reporting or resource saving, etc. may be achieved. For example, resource waste caused by reporting the remaining GNSS validity duration in case that there is no need to update the timing information may be avoided.

In an embodiment, before receiving the remaining GNSS validity duration transmitted from the terminal, the method further includes:
transmitting a reporting indication message, used for indicating the terminal to report the remaining GNSS validity duration, to the terminal.

In an embodiment, the access network entity may determine whether it is necessary to report the remaining GNSS validity duration, and in case that the access network entity determines that it is necessary to report the remaining GNSS validity duration, the access network entity indicates the terminal to report the remaining GNSS validity duration. In an embodiment, the access network entity may determine whether it is necessary to report the remaining GNSS validity duration in combination with the remaining serving time of the current cell, data volume that the access network entity needs to transmit to the terminal, or whether there is data on the preset DRB bearer/QoS flow. The above are examples for facilitating understanding the present application, and the embodiments of the present application do not limit a determination criteria of the network side (access network).

In the method for updating timing information provided by the embodiment of the present application, whether to report the remaining GNSS validity duration is determined by whether the reporting indication message, used for indicating the terminal to report the remaining GNSS validity duration, transmitted from the access network entity is received. It is not necessary to report the remaining GNSS validity duration every time, and a resource is saved.

In an embodiment, receiving the remaining GNSS validity duration transmitted from the terminal includes:
receiving the remaining GNSS validity duration transmitted from the terminal through a radio resource control (RRC) message; or
receiving the remaining GNSS validity duration transmitted from the terminal through a medium access control-control element (MAC-CE).

The remaining GNSS validity period transmitted from the terminal through the RRC message and the remaining GNSS validity period transmitted from the terminal through the MAC-CE may be referred to the above description, which is not repeated here.

In an embodiment, the method further includes:
receiving a time stamp, used for indicating start time of the remaining GNSS validity duration, transmitted from the terminal.

The time stamp may be referred to the above description, which is not repeated here.

In an embodiment, the method further includes:
transmitting a measurement trigger event to the terminal.

The measurement trigger event and the measurement procedure in case that the measurement trigger event is transmitted may be referred to the above description, which is not repeated here.

In an embodiment, the method further includes:
transmitting a first indication message to the terminal, where the first indication message carries configuration information used for indicating the terminal to perform GNSS acquisition.

The indication message may be referred to the above description, which is not repeated here.

The first indication message may be an RRC message or an MAC-CE.

In an embodiment, the configuration information includes one or more of the following:
a period of a gap time;
a time length of a gap time; or
a start time of a gap time;
where the gap time is used for indicating the terminal a time length for obtaining the GNSS information.

The gap time and the configuration information related to the gap time may be referred to the above description, which is not repeated here.

In an embodiment, before transmitting the first indication message to the terminal, the method further includes:
receiving first information transmitted from the terminal, where the first information includes one or more of the following:
information of a maximum time length for the terminal to obtain GNSS information; or
whether the terminal supports obtaining GNSS information in a connected state.

In an embodiment, the access network entity may determine the configuration information based on the first information transmitted from the terminal to the access network entity.

Whether the terminal supports obtaining GNSS information in the connected state in the first information is used to indicate whether the terminal device supports obtaining GNSS information in the connected state. In case that the terminal does not support obtaining GNSS information in the connected state, the access network entity may not configure the configuration information for the terminal, and a resource may be saved. The access network entity may configure the gap time used for GNSS measurement based on the information of the maximum time length for the terminal device to obtain the GNSS information in the first information.

The access network entity may obtain the GNSS measurement information (such as capability information and measurement parameter information) of the terminal based on the first information. In case that the terminal supports obtaining GNSS information in the connected state, the access network entity configures the gap time for the terminal based on the information of the maximum time length for obtaining GNSS information in the first information.

In the method for updating timing information provided by the embodiment of the present application, the access network entity configures, through the first message transmitted from the terminal to the access network entity, the configuration information for GNSS acquisition for the terminal, which avoids the terminal being unable to obtain valid GNSS information due to the gap time being too short, avoids the terminal being unable to obtain latest GNSS information in real time due to the gap time being too long, and improves the effectiveness and efficiency of GNSS acquisition.

The method for updating timing information provided by the embodiments of the present application is described in the following in combination with multiple embodiments.

The network side in the following embodiments may refer to an access network entity such as a base station.

Embodiment 1: in the method for updating timing information provided by the embodiments of the present application, remaining GNSS validity duration is reported through an RRC message.

Step 1: a terminal enters an RRC connected state and reports the remaining GNSS validity duration through Msg5.

In an embodiment, the terminal transmits first information to an access network entity, and the first information may include:
information of a maximum time length for the terminal to obtain GNSS information; or
whether the terminal supports obtaining GNSS information in a connected state.

Step 2: a network side (such as the access network entity) transmits a first indication message to the terminal in advance (for example, when the remaining GNSS validity duration is about to time out), where the first indication message is used to indicate the terminal to perform GNSS information acquisition; and the first indication message may also include time information for GNSS acquisition, which includes a start time of GNSS acquisition and a maximum time length of GNSS acquisition.

In case that the GNSS information is obtained through a GNSS measurement gap, the time information for GNSS acquisition is gap time information, the start time for GNSS acquisition is a start time of the gap time, and the maximum time length for GNSS acquisition is a time length of the gap time.

In an embodiment, the first indication message may be any of the following:
terminal information request (*UEInformationRequest*) message;
redefined first RRC message, such as *GNSSRequest* message; or
RRC reconfiguration (*OtherConfig*) message.

In an embodiment, the time length of the gap time is configured by the access network entity based on the first information reported by the terminal in step 1.

Step 3: after receiving the first indication message from the network side (such as the access network entity), the terminal immediately performs GNSS information acquisition or obtains the GNSS information within the gap time configured for GNSS measurement, and after the GNSS information is obtained, the terminal reports the remaining GNSS validity duration to the network side (such as the access network entity) through a second RRC message.

In an embodiment, the second RRC message may be any of the following:
*UEInformationResponse* message;
*ueAssistanceInformation* information; or
a newly defined second RRC message, such as a *GNSSResponse* message.

In an embodiment, the second RRC message carries a time stamp to indicate the start time of the remaining GNSS validity duration. This method may effectively avoid the problem of inconsistent understanding of the remaining GNSS validity duration between the terminal and the network side (e.g., an access network entity such as a base station) due to RLC retransmission or HARQ retransmission.

Embodiment 2: in the method for updating timing information provided by the embodiments of the present application, remaining GNSS validity duration is reported through a measurement report.

Step 1: a terminal enters an RRC connection state.

Step 2: a network side notifies the terminal configuration information for obtaining GNSS information, such as a way for configuring GNSS information acquisition.

In an embodiment, the configuration information includes one or more of the following:
a period of a gap time;
a time length of a gap time;
a start time of a gap time; or
a measurement trigger event.

The gap time is a time gap for the terminal to obtain GNSS information. The period of the gap time may be a gap period for obtaining the GNSS information; the time length of the gap time may be a GNSS gap length; and the start time of the gap time may be a GNSS gap start position.

The measurement trigger event may be at least one of the following:
the terminal obtains GNSS information; or
the terminal obtains GNSS information within [T1 T2] time, where T1 and T2 correspond to a start time and an end time of the gap time.

Step 3: after the GNSS validity timer times out, the terminal obtains GNSS information based on the way for GNSS acquisition configured in step 2, where the GNSS validity timer is used to time the remaining GNSS validity duration of obtained GNSS information, and after the remaining GNSS validity duration of the obtained GNSS information times out, new GNSS information is obtained.

Step 4: after the terminal reacquires the GNSS information, in case that a measurement trigger event is triggered, the terminal reports a measurement report to the access network entity, and the measurement report includes the remaining GNSS validity duration.

Embodiment 3: in the method for updating timing information provided in the embodiments of the present application, remaining GNSS validity duration is reported through an MAC-CE.

Step 1: a terminal enters an RRC connected state and reports the remaining GNSS validity duration through Msg5.

In an embodiment, the terminal transmits first information to an access network entity, and the first information may include:
information of a maximum time length for the terminal to obtain GNSS information; or
whether the terminal supports obtaining GNSS information in a connected state.

Step 2: a network side transmits a first indication message to the terminal in advance (for example, when reported remaining GNSS validity duration is about to time out); the first indication message is used to indicate the terminal to perform GNSS information acquisition.

In an embodiment, the first indication message may be a first MAC-CE.

Step 3: after receiving the first indication message from the network side, the terminal performs GNSS information acquisition, triggers reporting of a second MAC-CE after obtaining the GNSS information, and reports the remaining GNSS validity duration to the network side through the second MAC-CE in case that when there is an UL authorization.

In an embodiment, a logical channel ID for the second MAC-CE is defined.

In an embodiment, a first timer is defined, and the first timer is turned on after the terminal transmits the second MAC-CE on the UL authorization.

In an embodiment, after the first timer times out, the terminal re-triggers the second MAC-CE, updates the remaining GNSS validity duration, and then transmits it on a subsequent available UL authorization.

In an embodiment, in case that there is no UL authorization resource, the terminal may trigger an SR or a random access procedure, and transmit the second MAC-CE.

Two possible implementations of the second MAC-CE are provided below.

### Example 1

In an embodiment, FIG. 4 is a first schematic structural diagram of a second medium access control-control element (MAC-CE) according to an embodiment of the present application. As shown in FIG. 4, the second MAC-CE includes 16 bits, where each bit represents a value:
for example, T0 represents 10 slots, T1 represents 20 slots, T2 represents 30 slots, T3 represents 40 slots, T4 represents 50 slots, T5 represents 60 slots, T6 represents 5 minutes, T7 represents 10 minutes, T8 represents 15 minutes, T9 represents 20 minutes, T10 represents 25 minutes, T11 represents 30 minutes, T12 represents 50 minutes, T13 represents 90 minutes, T14 represents 120 minutes, and T15 represents infinity.

### Example 2:

In an embodiment, FIG. 5 is a second schematic structural diagram of a second MAC-CE according to an embodiment of the present application. As shown in FIG. 5, the second MAC-CE includes 4 bits, where 0000 represents 10 slots, 0001 represents 20 slots, 0010 represents 30 slots, 0011 represents 40 slots, 0100 represents 50 slots, 0101 represents 60 slots, 0110 represents 5 minutes, 0111 represents 10 minutes, 1000 represents 15 minutes, 1001 represents 20 minutes, 1010 represents 25 minutes, 1011 represents 30 minutes, 1100 represents 50 minutes, 1101 represents 90 minutes, 1110 represents 120 minutes, and 1111 represents infinity.

In an embodiment, in case that the terminal reacquires the GNSS information or has transmitted the second MAC-CE, triggering of the second MAC-CE is canceled, and repeated transmitting of the MAC-CE is reduced.

Embodiment 4: in the method for updating timing information provided by the embodiments of the present application, a condition for a terminal to report GNSS information remaining GNSS validity duration.

Step 1: after the terminal obtains GNSS information, one or more of the following conditions are determined. In case that one or more of the following conditions are satisfied, the remaining GNSS validity duration is transmitted to a network side. Otherwise, the terminal does not transmit the remaining GNSS validity duration, which reduces redundant reporting of the remaining GNSS validity duration.

The conditions may include:
remaining service time of a current cell is greater than the remaining GNSS validity duration: the terminal determines whether the remaining serving time of the current cell is greater than the remaining GNSS validity duration, if so, the terminal reports the remaining GNSS validity duration, otherwise the terminal does not report the remaining GNSS validity duration;
in case that the terminal is an MTC type, if the terminal determines before the handover that the remaining serving time of the current cell serving a UE is greater than the remaining GNSS validity duration, the terminal may transmit the remaining GNSS validity duration when transmitting a handover complete message;
in case that the network side indicates the terminal to report the remaining GNSS validity duration, that is, in case that the terminal receives a reporting indication message, transmitted from the access network entity, used for indicating the terminal to report the remaining GNSS validity duration, the remaining GNSS validity duration is reported to the network side;
data volume of the terminal is greater than a reporting threshold: in case that the data volume of the terminal is greater than the reporting threshold, the remaining GNSS validity duration is reported to the network side, and the reporting threshold is notified by the network side; or
in case that data on a DRB bearer/QoS flow that satisfies a configuration of the network side arrives.

A method for the terminal to determine the remaining serving time of the current cell includes but is not limited to:
reading a broadcast message, *t-ServingTime;*
calculating based on a satellite speed, a terminal speed, satellite position information, and terminal position information.

The fourth embodiment may be combined with the above-mentioned first to third embodiments.

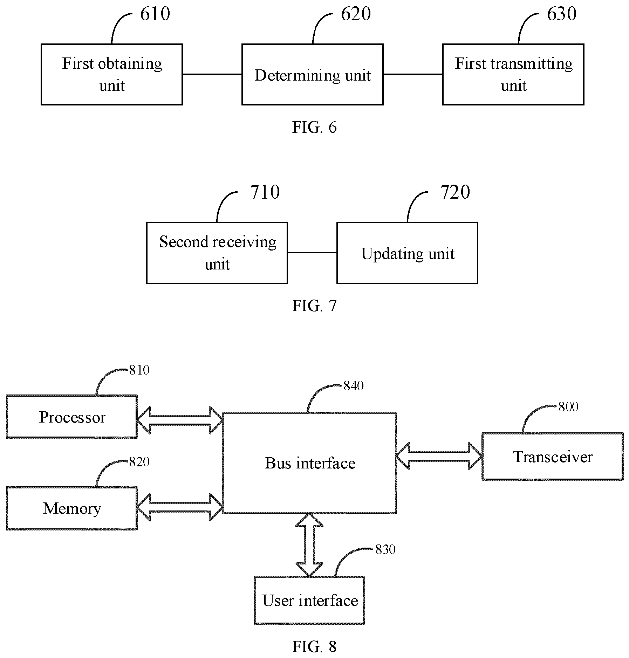

Referring to FIG. 6, FIG. 6 is a first schematic structural diagram of an apparatus for updating timing information according to an embodiment of the present application. An embodiment of the present application provides an apparatus for updating timing information, and the apparatus is used in a terminal, including:
a first obtaining unit 610, used for obtaining global navigation satellite system (GNSS) information;
a determining unit 620, used for determining remaining GNSS validity duration; and
a first transmitting unit 630, used for transmitting the remaining GNSS validity duration to an access network entity in case of a reporting condition is satisfied.

In an embodiment, the reporting condition includes one or more of the following:
remaining serving time of a current cell is greater than the remaining GNSS validity duration;
a reporting indication message from the access network entity, used for indicating the terminal to report the remaining GNSS validity duration, is received;
data volume of the terminal is greater than a reporting threshold;
data is received through a preset data radio bearer (DRB);
data is received through a preset quality of service (QoS) flow; or
the GNSS information is valid.

In an embodiment, the first transmitting unit 630 includes:
a first transmitting subunit, used for transmitting the remaining GNSS validity duration to the access network entity through a radio resource control (RRC) message; or
a second transmitting subunit, used for transmitting the remaining GNSS validity duration to the access network entity through a medium access control-control element (MAC-CE).

In an embodiment, the apparatus further includes:
a second transmitting unit, used for transmitting a time stamp used for indicating start time of the remaining GNSS validity duration to the access network entity.

In an embodiment, the apparatus further includes:
a third transmitting unit, used for receiving a measurement trigger event transmitted from the access network entity;
where the first transmitting unit 630 includes:
   a third transmitting subunit, used for transmitting a measurement report to the access network entity in case that determining the reporting condition is satisfied and the measurement trigger event is triggered, where the measurement report carries the remaining GNSS validity duration.

In an embodiment, the apparatus further includes:
a first receiving unit, used for receiving a first indication message transmitted from the access network entity, where the first indication message carries configuration information used for indicating the terminal to perform GNSS acquisition; and
a second obtaining unit, used for obtaining the GNSS information based on the configuration information.

In an embodiment, the configuration information includes one or more of the following:
a period of a gap time;
a time length of a gap time; or
a start time of a gap time;
where the gap time is used for indicating the terminal a time length for obtaining the GNSS information.

In an embodiment, the apparatus further includes:
a fourth transmitting unit, used for transmitting first information to the access network entity, where the first information includes one or more of the following:
information of a maximum time length for the terminal to obtain GNSS information; or
whether the terminal supports obtaining GNSS information in a connected state.

The methods and apparatuses provided by the embodiments of the present application are based on the same conception. Since a principle for solving a problem by the method for updating the timing information performed by the terminal and the apparatus for updating timing information for use in the terminal are similar and may achieve the same effects, the implementations of the apparatuses and the methods may be referred to each other and the same part is not repeated.

Referring to FIG. 7, FIG. 7 is a second schematic structural diagram of an apparatus for updating timing information according to an embodiment of the present application. An embodiment of the present application provides an apparatus for updating timing information, and the apparatus is used in an access network entity, including:
a second receiving unit 710, used for receiving remaining global navigation satellite system (GNSS) validity duration transmitted from a terminal, where the remaining GNSS validity duration is transmitted from the terminal in case that the terminal determines a reporting condition is satisfied; and
an updating unit 720, used for updating a GNSS position validity timer based on the remaining GNSS validity duration.

In an embodiment, the apparatus further includes:
a fifth transmitting unit, used for transmitting a reporting indication message, used for indicating the terminal to report the remaining GNSS validity duration, to the terminal.

In an embodiment, the second receiving unit 710 includes:
a first receiving subunit, used for receiving the remaining GNSS validity duration transmitted from the terminal through a radio resource control (RRC) message; or
a second receiving subunit, used for receiving the remaining GNSS validity duration transmitted from the terminal through a medium access control-control element (MAC-CE).

In an embodiment, the apparatus further includes:
a third receiving unit, used for receiving a time stamp, used for indicating start time of the remaining GNSS validity duration, transmitted from the terminal.

In an embodiment, the apparatus further includes:
a sixth transmitting unit, used for transmitting a measurement trigger event to the terminal.

In an embodiment, the apparatus further includes:
a seventh transmitting unit, used for transmitting a first indication message to the terminal, where the first indication message carries configuration information used for indicating the terminal to perform GNSS acquisition.

In an embodiment, the configuration information includes one or more of the following:
a period of a gap time;
a time length of a gap time; or
a start time of a gap time;
where the gap time is used for indicating the terminal a time length for obtaining the GNSS information.

In an embodiment, the apparatus further includes:
a fourth receiving unit, used for receiving first information transmitted from the terminal, where the first information includes one or more of the following:
information of a maximum time length for the terminal to obtain GNSS information; or whether the terminal supports obtaining GNSS information in a connected state.

The methods and apparatuses provided by the embodiments of the present application are based on the same conception. Since a principle for solving a problem by the method for updating the timing information performed by the access network entity and the apparatus for updating timing information for use in the access network entity are similar and may achieve the same effects, the implementations of the apparatuses and the methods may be referred to each other and the same part is not repeated.

It should be noted that, the division of units in the embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.

If the integrated unit is implemented in the form of a software functional unit and sold or used as an independent product, it may be stored in a processor readable storage medium. Based on such understanding, the solutions of the present application in essence or a part of the solutions that contributes to the prior art, or all or part of the solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that may store program codes such as a U disk, a mobile hard disk, a read-only memory (ROM), a random access memory (RAM), a magnetic disk, or a compact disk.

FIG. 8 is a schematic structural diagram of a terminal according to an embodiment of the present application. As shown in FIG. 8, the terminal includes a memory 820, a transceiver 800 and a processor 810, where the processor 810 and memory 820 may be physically arranged separately.

The memory 820 is used for storing a computer program, and the transceiver 800 is used for receiving and transmitting data under control of the processor 810. The processor 810 calls the computer program stored in the memory 820 to execute operations corresponding to any of the methods for updating timing information performed by a terminal provided by the embodiments of the present application in accordance with the obtained executable instructions. For example, the operations include:
obtaining global navigation satellite system (GNSS) information;
determining remaining GNSS validity duration; and
transmitting the remaining GNSS validity duration to an access network entity in case of a reporting condition is satisfied.

In an embodiment, the transceiver 800 is used for receiving and transmitting data under control of the processor 810.

In FIG. 8, a bus interface 840 may include any number of interconnected buses and bridges, which are linked together through various circuits of one or more processors represented by the processor 810 and one or more memories represented by the memory 820. The bus interface 840 may also link together various other circuits, such as peripherals, voltage regulators, and power management circuits, etc., which are well known in the art, and therefore are not further described in the present application. The bus interface provides an interface. The transceiver 800 may include multiple elements, i.e., including a transmitter and a receiver, units for providing communication with various other devices over transmission media including wireless channels, wired channels, fiber optic cables, and the like. For different terminals, a user interface 830 may also be included, the user interface 830 may also be an interface capable of externally or internally connecting the required equipment, and the connected equipment includes, but not limited to, a keypad, a display, a speaker, a microphone, a joystick, and the like.

The processor 810 is responsible for managing the bus architecture and general processing, and the memory 820 may store data used by the processor 810 when performing operations.

In an embodiment, the processor 810 may be a central processing unit (CPU), an application specific integrated circuit (ASIC), a field-programmable gate array (FPGA), or a complex programmable logic device (CPLD), the processor may also use a multi-core architecture.

In an embodiment, the reporting condition includes one or more of the following:
remaining serving time of a current cell is greater than the remaining GNSS validity duration;
a reporting indication message from the access network entity, used for indicating the terminal to report the remaining GNSS validity duration, is received;
data volume of the terminal is greater than a reporting threshold;
data is received through a preset data radio bearer (DRB);
data is received through a preset quality of service (QoS) flow; or
the GNSS information is valid.

In an embodiment, transmitting the remaining GNSS validity duration to the access network entity includes:
transmitting the remaining GNSS validity duration to the access network entity through a radio resource control (RRC) message; or
transmitting the remaining GNSS validity duration to the access network entity through a medium access control-control element (MAC-CE).

In an embodiment, the operations further include: transmitting a time stamp used for indicating start time of the remaining GNSS validity duration to the access network entity.

In an embodiment, the operations further include:
receiving a measurement trigger event transmitted from the access network entity; and
transmitting the remaining GNSS validity duration to the access network entity in case that determining the reporting condition is satisfied includes:
   transmitting a measurement report to the access network entity in case that determining the reporting condition is satisfied and the measurement trigger event is triggered, where the measurement report carries the remaining GNSS validity duration.

In an embodiment, the operations further include:
receiving a first indication message transmitted from the access network entity, where the first indication message carries configuration information used for indicating the terminal to perform GNSS acquisition; and
obtaining the GNSS information based on the configuration information.

In an embodiment, the configuration information includes one or more of the following:
a period of a gap time;
a time length of a gap time; or
a start time of a gap time;
where the gap time is used for indicating the terminal a time length for obtaining the GNSS information.

In an embodiment, before receiving the first indication message transmitted from the access network entity, the operations further include:
transmitting first information to the access network entity, where the first information includes one or more of the following:
information of a maximum time length for the terminal to obtain GNSS information; or
whether the terminal supports obtaining GNSS information in a connected state.

It should be noted here that the above terminal provided by the embodiments of the present application may implement all the method steps implemented by the above embodiments of the method for updating timing information performed by a terminal, and may achieve the same effect. The parts and beneficial effects of this embodiment that are the same as those of the method embodiments are not repeated here.

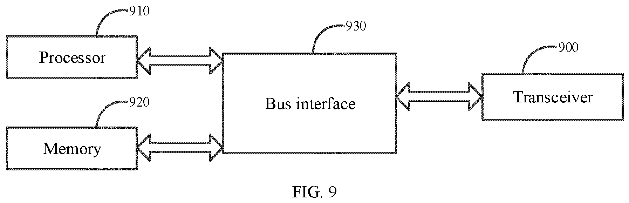

FIG. 9 is a schematic structural diagram of an access network entity according to an embodiment of the present application. As shown in FIG. 9, the access network entity includes a memory 920, a transceiver 900 and a processor 910,
where the memory 920 is used for storing a computer program, the transceiver 900 is used for receiving and transmitting data under control of the processor 910, and the processor 910 is used for reading the computer program in the memory 920 and performing the following operations:
receiving remaining global navigation satellite system (GNSS) validity duration transmitted from a terminal, where the remaining GNSS validity duration is transmitted from the terminal in case that the terminal determines a reporting condition is satisfied; and
updating a GNSS position validity timer based on the remaining GNSS validity duration.

In an embodiment, the transceiver 900 is used for receiving and transmitting data under control of the processor 910.

In FIG. 9, a bus architecture may include any number of interconnected buses and bridges, which are linked together through various circuits of one or more processors represented by the processor 910 and one or more memories represented by the memory 920. The bus architecture may also link together various other circuits, such as peripherals, voltage regulators, and power management circuits, etc., which are well known in the art, and therefore are not further described in the present application. The bus interface 930 provides an interface. The transceiver 900 may include multiple elements, i.e., including a transmitter and a receiver, units for providing communication with various other devices over transmission media including wireless channels, wired channels, fiber optic cables, and the like. The processor 910 is responsible for managing the bus architecture and general processing, and the memory 920 may store data used by the processor 910 when performing operations.

The processor 910 may be a central processing unit (CPU), an application specific integrated circuit (ASIC), a field-programmable gate array (FPGA), or a complex programmable logic device (CPLD), the processor may also use a multi-core architecture.

In an embodiment, before receiving the remaining GNSS validity duration transmitted from the terminal, the operations further include:
transmitting a reporting indication message, used for indicating the terminal to report the remaining GNSS validity duration, to the terminal.

In an embodiment, receiving the remaining GNSS validity duration transmitted from the terminal includes:
receiving the remaining GNSS validity duration transmitted from the terminal through a radio resource control (RRC) message; or
receiving the remaining GNSS validity duration transmitted from the terminal through a medium access control-control element (MAC-CE).

In an embodiment, the operations further include:
receiving a time stamp, used for indicating start time of the remaining GNSS validity duration, transmitted from the terminal.

In an embodiment, the operations further include:
transmitting a measurement trigger event to the terminal.

**In** an embodiment, the operations further include:
transmitting a first indication message to the terminal, where the first indication message carries configuration information used for indicating the terminal to perform GNSS acquisition.

**In** an embodiment, the configuration information includes one or more of the following:
a period of a gap time;
a time length of a gap time; or
a start time of a gap time;
where the gap time is used for indicating the terminal a time length for obtaining the GNSS information.

**In** an embodiment, before transmitting the first indication message to the terminal, the operations further include:
receiving first information transmitted from the terminal, where the first information includes one or more of the following:
information of a maximum time length for the terminal to obtain GNSS information; or
whether the terminal supports obtaining GNSS information in a connected state.

It should be noted here that the above access network entity provided by the embodiments of the present application may implement all the method steps implemented by the above embodiments of the method for updating timing information performed by an access network entity, and may achieve the same effect. The parts and beneficial effects of this embodiment that are the same as those of the method embodiments are not repeated here.

An embodiment of the present application further provides a processor-readable storage medium storing a computer program, where the computer program is used for causing a processor to perform the methods for updating timing information performed by a terminal provided by the above embodiments, including:
obtaining global navigation satellite system (GNSS) information;
determining remaining GNSS validity duration; and
transmitting the remaining GNSS validity duration to an access network entity in case of a reporting condition is satisfied.

An embodiment of the present application further provides a processor-readable storage medium storing a computer program, where the computer program is used for causing a processor to perform the methods for updating timing information performed by an access network entity provided by the above embodiments, including:
receiving remaining global navigation satellite system (GNSS) validity duration transmitted from a terminal, where the remaining GNSS validity duration is transmitted from the terminal in case that the terminal determines a reporting condition is satisfied; and
updating a GNSS position validity timer based on the remaining GNSS validity duration.

The processor readable storage medium may be any available medium or data storage device that may be accessed by the computer, including but not limited to, a magnetic storage (e.g., a floppy disk, a hard disk, a magnetic tape, a magneto-optical disk (MO), etc.), an optical memory (such as CD, DVD, BD, HVD, etc.), and a semiconductor memory (such as ROM, EPROM, EEPROM, a non-volatile memory (NAND FLASH), a solid-state drive (SSD)), etc.

As will be appreciated by those skilled in the art, embodiments of the present application may be provided as a method, system, or computer program product. Accordingly, the present application may take the form of an entirely hardware embodiment, an entirely software embodiment, or an embodiment combining software and hardware aspects. Furthermore, the present application may take the form of a computer program product embodied on one or more computer-usable storage media having computer-usable program code embodied therein, including but not limited to disk storage, optical storage, and the like.

The present application is described with reference to flow charts and/or block diagrams of methods, apparatus (systems), and computer program products according to embodiments of the present application. It will be understood that each flow and/or block in the flow charts and/or block diagrams, and combinations thereof may be implemented by computer-executable instructions. These computer-executable instructions may be provided to processors of a general purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These processor-executable instructions may also be stored in a processor-readable memory capable of directing a computer or other programmable data processing apparatus to operate in a particular manner, and the instructions stored in the processor-readable memory may result in a manufacture including instruction means, the instruction means may perform the functions specified in one or more flows of the flowchart and/or one or more blocks of the block diagram.

These processor-executable instructions may also be loaded onto a computer or other programmable data processing device to cause a series of operational steps to be performed on the computer or other programmable device to produce a computer-implemented process and instructions performed on the computer or other programmable devices provide steps for performing the functions specified in one or more flows of the flowchart and/or one or more blocks of the block diagram.

It will be apparent to those skilled in the art that various modifications and variations may be made in the present application without departing from the scope of the present application. Thus, provided that these modifications and variations of the present application fall within the scope of the claims of the present application and their equivalents, the present application is also intended to cover such modifications and variations.

## Claims

1. A method for updating timing information, performed by a terminal, comprising:
obtaining global navigation satellite system (GNSS) information;
determining remaining GNSS validity duration; and
transmitting the remaining GNSS validity duration to an access network entity in case of a reporting condition is satisfied.

2. The method of claim 1, wherein the reporting condition comprises one or more of the following:
remaining serving time of a current cell is greater than the remaining GNSS validity duration;
a reporting indication message from the access network entity, used for indicating the terminal to report the remaining GNSS validity duration, is received;
data volume of the terminal is greater than a reporting threshold;
data is received through a preset data radio bearer (DRB);
data is received through a preset quality of service (QoS) flow; or
the GNSS information is valid.

3. The method of claim 1, wherein transmitting the remaining GNSS validity duration to the access network entity comprises:
transmitting the remaining GNSS validity duration to the access network entity through a radio resource control (RRC) message; or
transmitting the remaining GNSS validity duration to the access network entity through a medium access control-control element (MAC-CE).

4. The method of claim 1 or 2, further comprising: transmitting a time stamp used for indicating start time of the remaining GNSS validity duration to the access network entity.

5. The method of claim 1 or 2, further comprising:
receiving a measurement trigger event transmitted from the access network entity; and
transmitting the remaining GNSS validity duration to the access network entity in case that determining the reporting condition is satisfied comprises:
transmitting a measurement report to the access network entity in case that determining the reporting condition is satisfied and the measurement trigger event is triggered, wherein the measurement report carries the remaining GNSS validity duration.

6. The method of claim 1 or 2, further comprising:
receiving a first indication message transmitted from the access network entity, wherein the first indication message carries configuration information used for indicating the terminal to perform GNSS acquisition; and
obtaining the GNSS information based on the configuration information.

7. The method of claim 5, wherein the configuration information comprises one or more of the following:
a period of a gap time;
a time length of a gap time; or
a start time of a gap time;
wherein the gap time is used for indicating the terminal a time length for obtaining the GNSS information.

8. The method of claim 5, wherein before receiving the first indication message transmitted from the access network entity, the method further comprises:
transmitting first information to the access network entity, wherein the first information comprises one or more of the following:
information of a maximum time length for the terminal to obtain GNSS information; or
whether the terminal supports obtaining GNSS information in a connected state.

9. A method for updating timing information, performed by an access network entity, comprising:
receiving remaining global navigation satellite system (GNSS) validity duration transmitted from a terminal, wherein the remaining GNSS validity duration is transmitted from the terminal in case that the terminal determines a reporting condition is satisfied; and
updating a GNSS position validity timer based on the remaining GNSS validity duration.

10. The method of claim 9, wherein before receiving the remaining GNSS validity duration transmitted from the terminal, the method further comprises:
transmitting a reporting indication message, used for indicating the terminal to report the remaining GNSS validity duration, to the terminal.

11. The method of claim 9, wherein receiving the remaining GNSS validity duration transmitted from the terminal comprises:
receiving the remaining GNSS validity duration transmitted from the terminal through a radio resource control (RRC) message; or
receiving the remaining GNSS validity duration transmitted from the terminal through a medium access control-control element (MAC-CE).

12. The method of claim 9, further comprising:
receiving a time stamp, used for indicating start time of the remaining GNSS validity duration, transmitted from the terminal.

13. The method of claim 9, further comprising:
transmitting a measurement trigger event to the terminal.

14. The method of claim 9, further comprising:
transmitting a first indication message to the terminal, wherein the first indication message carries configuration information used for indicating the terminal to perform GNSS acquisition.

15. The method of claim 14, wherein the configuration information comprises one or more of the following:
a period of a gap time;
a time length of a gap time; or
a start time of a gap time;
wherein the gap time is used for indicating the terminal a time length for obtaining the GNSS information.

16. The method of claim 14, wherein before transmitting the first indication message to the terminal, the method further comprises:
receiving first information transmitted from the terminal, wherein the first information comprises one or more of the following:
information of a maximum time length for the terminal to obtain GNSS information; or
whether the terminal supports obtaining GNSS information in a connected state.

17. A terminal, comprising a memory, a transceiver and a processor,
wherein the memory is used for storing a computer program, the transceiver is used for receiving and transmitting data under control of the processor, and the processor is used for reading the computer program in the memory and performing the following operations:
obtaining global navigation satellite system (GNSS) information;
determining remaining GNSS validity duration; and
transmitting the remaining GNSS validity duration to an access network entity in case of a reporting condition is satisfied.

18. The terminal of claim 17, wherein the reporting condition comprises one or more of the following:
remaining serving time of a current cell is greater than the remaining GNSS validity duration;
a reporting indication message from the access network entity, used for indicating the terminal to report the remaining GNSS validity duration, is received;
data volume of the terminal is greater than a reporting threshold;
data is received through a preset data radio bearer (DRB);
data is received through a preset quality of service (QoS) flow; or
the GNSS information is valid.

19. The terminal of claim 17, wherein transmitting the remaining GNSS validity duration to the access network entity comprises:
transmitting the remaining GNSS validity duration to the access network entity through a radio resource control (RRC) message; or
transmitting the remaining GNSS validity duration to the access network entity through a medium access control-control element (MAC-CE).

20. The terminal of claim 17 or 18, wherein the operations further comprise: transmitting a time stamp used for indicating start time of the remaining GNSS validity duration to the access network entity.

21. The terminal of claim 17 or 18, wherein the operations further comprise:
receiving a measurement trigger event transmitted from the access network entity; and
transmitting the remaining GNSS validity duration to the access network entity in case that determining the reporting condition is satisfied comprises:
transmitting a measurement report to the access network entity in case that determining the reporting condition is satisfied and the measurement trigger event is triggered, wherein the measurement report carries the remaining GNSS validity duration.

22. The terminal of claim 17 or 18, wherein the operations further comprise:
receiving a first indication message transmitted from the access network entity, wherein the first indication message carries configuration information used for indicating the terminal to perform GNSS acquisition; and
obtaining the GNSS information based on the configuration information.

23. The terminal of claim 20, wherein the configuration information comprises one or more of the following:
a period of a gap time;
a time length of a gap time; or
a start time of a gap time;
wherein the gap time is used for indicating the terminal a time length for obtaining the GNSS information.

24. The terminal of claim 20, wherein before receiving the first indication message transmitted from the access network entity, the operations further comprise:
transmitting first information to the access network entity, wherein the first information comprises one or more of the following:
information of a maximum time length for the terminal to obtain GNSS information; or
whether the terminal supports obtaining GNSS information in a connected state.

25. An access network entity, comprising a memory, a transceiver and a processor,
wherein the memory is used for storing a computer program, the transceiver is used for receiving and transmitting data under control of the processor, and the processor is used for reading the computer program in the memory and performing the following operations:
receiving remaining global navigation satellite system (GNSS) validity duration transmitted from a terminal, wherein the remaining GNSS validity duration is transmitted from the terminal in case that the terminal determines a reporting condition is satisfied; and
updating a GNSS position validity timer based on the remaining GNSS validity duration.

26. The access network entity of claim 25, wherein before receiving the remaining GNSS validity duration transmitted from the terminal, the operations further comprise:
transmitting a reporting indication message, used for indicating the terminal to report the remaining GNSS validity duration, to the terminal.

27. The access network entity of claim 25, wherein receiving the remaining GNSS validity duration transmitted from the terminal comprises:
receiving the remaining GNSS validity duration transmitted from the terminal through a radio resource control (RRC) message; or
receiving the remaining GNSS validity duration transmitted from the terminal through a medium access control-control element (MAC-CE).

28. The access network entity of claim 25, wherein the operations further comprise:
receiving a time stamp, used for indicating start time of the remaining GNSS validity duration, transmitted from the terminal.

29. The access network entity of claim 25, wherein the operations further comprise:
transmitting a measurement trigger event to the terminal.

30. The access network entity of claim 25, wherein the operations further comprise:
transmitting a first indication message to the terminal, wherein the first indication message carries configuration information used for indicating the terminal to perform GNSS acquisition.

31. The access network entity of claim 30, wherein the configuration information comprises one or more of the following:
a period of a gap time;
a time length of a gap time; or
a start time of a gap time;
wherein the gap time is used for indicating the terminal a time length for obtaining the GNSS information.

32. The access network entity of claim 30, wherein before transmitting the first indication message to the terminal, the operations further comprise:
receiving first information transmitted from the terminal, wherein the first information comprises one or more of the following:
information of a maximum time length for the terminal to obtain GNSS information; or
whether the terminal supports obtaining GNSS information in a connected state.

33. An apparatus for updating timing information, for use in a terminal, comprising:
a first obtaining unit, used for obtaining global navigation satellite system (GNSS) information;
a determining unit, used for determining remaining GNSS validity duration; and
a first transmitting unit, used for transmitting the remaining GNSS validity duration to an access network entity in case of a reporting condition is satisfied.

34. The apparatus of claim 33, wherein the reporting condition comprises one or more of the following:
remaining serving time of a current cell is greater than the remaining GNSS validity duration;
a reporting indication message from the access network entity, used for indicating the terminal to report the remaining GNSS validity duration, is received;
data volume of the terminal is greater than a reporting threshold;
data is received through a preset data radio bearer (DRB);
data is received through a preset quality of service (QoS) flow; or
the GNSS information is valid.

35. The apparatus of claim 33, wherein the first transmitting unit comprises:
a first transmitting subunit, used for transmitting the remaining GNSS validity duration to the access network entity through a radio resource control (RRC) message; or
a second transmitting subunit, used for transmitting the remaining GNSS validity duration to the access network entity through a medium access control-control element (MAC-CE).

36. The apparatus of claim 33 or 34, further comprising:
a second transmitting unit, used for transmitting a time stamp used for indicating start time of the remaining GNSS validity duration to the access network entity.

37. The apparatus of claim 33 or 34, further comprising:
a third transmitting unit, used for receiving a measurement trigger event transmitted from the access network entity;
wherein the first transmitting unit comprises:
a third transmitting subunit, used for transmitting a measurement report to the access network entity in case that determining the reporting condition is satisfied and the measurement trigger event is triggered, wherein the measurement report carries the remaining GNSS validity duration.

38. The apparatus of claim 33 or 34, further comprising:
a first receiving unit, used for receiving a first indication message transmitted from the access network entity, wherein the first indication message carries configuration information used for indicating the terminal to perform GNSS acquisition; and
a second obtaining unit, used for obtaining the GNSS information based on the configuration information.

39. The apparatus of claim 38, wherein the configuration information comprises one or more of the following:
a period of a gap time;
a time length of a gap time; or
a start time of a gap time;
wherein the gap time is used for indicating the terminal a time length for obtaining the GNSS information.

40. The apparatus of claim 38, further comprising:
a fourth transmitting unit, used for transmitting first information to the access network entity, wherein the first information comprises one or more of the following:
information of a maximum time length for the terminal to obtain GNSS information; or
whether the terminal supports obtaining GNSS information in a connected state.

41. An apparatus for updating timing information, for use in an access network entity, comprising:
a second receiving unit, used for receiving remaining global navigation satellite system (GNSS) validity duration transmitted from a terminal, wherein the remaining GNSS validity duration is transmitted from the terminal in case that the terminal determines a reporting condition is satisfied; and
an updating unit, used for updating a GNSS position validity timer based on the remaining GNSS validity duration.

42. The apparatus of claim 41, further comprising:
a fifth transmitting unit, used for transmitting a reporting indication message, used for indicating the terminal to report the remaining GNSS validity duration, to the terminal.

43. The apparatus of claim 41, wherein the second receiving unit comprises:
a first receiving subunit, used for receiving the remaining GNSS validity duration transmitted from the terminal through a radio resource control (RRC) message; or
a second receiving subunit, used for receiving the remaining GNSS validity duration transmitted from the terminal through a medium access control-control element (MAC-CE).

44. The apparatus of claim 41, further comprising:
a third receiving unit, used for receiving a time stamp, used for indicating start time of the remaining GNSS validity duration, transmitted from the terminal.

45. The apparatus of claim 41, further comprising:
a sixth transmitting unit, used for transmitting a measurement trigger event to the terminal.

46. The apparatus of claim 41, further comprising:
a seventh transmitting unit, used for transmitting a first indication message to the terminal, wherein the first indication message carries configuration information used for indicating the terminal to perform GNSS acquisition.

47. The apparatus of claim 46, wherein the configuration information comprises one or more of the following:
a period of a gap time;
a time length of a gap time; or
a start time of a gap time;
wherein the gap time is used for indicating the terminal a time length for obtaining the GNSS information.

48. The apparatus of claim 46, further comprising:
a fourth receiving unit, used for receiving first information transmitted from the terminal, wherein the first information comprises one or more of the following:
information of a maximum time length for the terminal to obtain GNSS information; or
whether the terminal supports obtaining GNSS information in a connected state.

49. A processor-readable storage medium storing a computer program, wherein the computer program is used for causing a processor to perform the method of any of claims 1 to 16.
